# EUROPEAN PATENT APPLICATION

(11) **EP 1 501 167 A2**
(43) Date of publication of application: **26.01.2005**
(21) Application number: 04016951.8
(22) Date of filing: 19.07.2004
(51) Int. Cl.: H02J 13/00

(54) **System and method for detecting faults in an aircraft electrical power system**

(30) Priority: 19.07.2003 DE 10332925
(71) Applicant: Airbus Deutschland GmbH, 21129 Hamburg (DE)
(72) Inventor: Kohlmeier-Beckman, Carsten, Dipl.-Ing., 21614 Buxtehude (DE); Kessler, Jens, 21614 Buxtehude (DE)
(74) Representative: Klöpper, Ute, Dipl.-Ing.

(57) **Abstract**

An aircraft electrical power system includes a monitored load (e.g. group of lightbulbs) connected through a sub_system power unit and a power distribution center to a power bus. A current monitor of the power distribution center is able to detect a total failure of the sub_system power unit and its connected monitored load, but is not able directly to detect the failure of a single load component (e.g. single lightbulb). The sub_system power unit includes a fault detector able to detect a fault or failure of a single load component (e.g. single lightbulb) in the monitored load. When the fault detector detects such a fault, the sub_system power unit generates a modulated current signal in the current drawn by the sub_system power unit, with a magnitude greater than the detection threshold of the power distribution center, which thus recognizes the detected fault based on the modulated current signal.

## Description

The invention relates to a system and a method for detecting faults, such as open circuits, short circuits, burned_out bulbs, and the like, in an electrical power system of an aircraft.

### BACKGROUND INFORMATION

An electrical power supply grid or distribution system in a modern aircraft typically includes one or more power generators or sources connected to a main power bus to supply electrical power to the bus, and one or more power distribution centers connected to the power bus to distribute the available electrical power to various power_consuming sub_systems. The power_consuming sub_systems, for example, include galley ovens, galley water heaters, galley coffee makers, cabin lighting systems, exterior lighting systems, and the like. Each sub_system has one or more power_consuming loads connected thereto, for example individual lights (i.e. an individual lightbulb or LED) or light circuits including plural lightbulbs or LEDs. The connections of the power_consuming loads to the power distribution center or centers are carried out via conventional ordinary electrical conductor wires as well as switching elements.

Previous existing arrangements of electrical power systems of aircraft have been disclosed in US Patent 5,936,318 (Weiler et al.) issued August 10, 1999, and US Patent Application Publication 2004/0057177 A1 (Glahn et al.) published March 25, 2004. The entire disclosures of these two documents are incorporated herein by reference.

Although the use and functionality of databus systems is ever_increasing in aircraft, there are still many devices and particularly power_consuming loads that are simply connected directly to the aircraft power supply grid through conventional switching devices and the like, e.g. being connected via a power distribution center to the main power bus. When these power connections are carried out via simple conventional conductors and switching circuits, it is not possible to provide a fault monitoring of the devices or power_consuming loads. This is true especially for individual power_consuming loads that have a relatively low power consumption, e.g. a relatively low current draw.

A conventional power distribution center in an aircraft power system includes a current monitoring circuit to monitor the total current being supplied through the power distribution center. However, the lower limit or threshold of a detectable current variation in the power distribution center is generally greater than the current variation resulting from certain kinds of individual faults, for example, the failure or "burning out" of a single lightbulb or LED. Thus, the current variations resulting from the failure of individual small power_consuming devices or loads lie below the minimum detectable or discriminatable threshold of the current monitoring function of the power distribution center. In this regard, it must be considered that the detection threshold of the current variation to be detected as abnormal in the power distribution center must be high enough to avoid false detection of a non_fault situation as a fault. For example, the power distribution bus or conductors are subject to various current fluctuations and also interference, which exhibit a certain current variation, but do not impair the proper functionality of the power_consuming devices connected to the conductor lines or power bus. There are also various indeterminable factors that affect the suitable minimum threshold for the detection of power faults. In any event, for these reasons, the minimum threshold in a power distribution center for detecting a current variation indicative of a fault lies significantly above the level of current variations resulting from the failure of individual small power_consuming loads, for example especially individual LEDs or LED strands.

For the above reasons, a conventional aircraft power system is only able to detect the total failure of a particular branch circuit connected to a power distribution center (assuming that this branch circuit draws a total normal operating current above the detection threshold in the power distribution center). In other words, if the entire system branch served by a power distribution center fails, then the power distribution center will detect the resulting current variation, and signal a fault or failure by releasing a corresponding failure message or signal. On the other hand, the conventional power distribution center is not able to detect the partial failure or an incomplete fault of one or more individual power_consuming loads in an assembly or sub_system including a large number of such small power_consuming loads, such as individual LEDs or LED groups in a lighting system.

In view of the above, it is an object of the invention to provide both a system or apparatus and a method that are able to detect not only a total failure of a branch circuit, but also individual faults or failures of one or more individual power_consuming loads in an assembly or sub_system of the electrical power system. Another object of the invention is to provide such a system and such a method that can be incorporated into conventional aircraft electrical power system designs in a simple and economical manner, using only the existing power supply conductors between the power distribution center and one or more sub_systems or power_consuming assemblies. The invention further aims to avoid or overcome the disadvantages of the prior art, and to achieve additional advantages, as apparent from the present specification. The attainment of these objects is, however, not a required limitation of the present invention.

The above objects have been achieved according to the invention in an aircraft having an electrical power system including a main power bus, a power distribution center connected to the main power bus, and plural power_consuming loads connected to the power distribution center. The invention provides an improvement in the electrical power system further including a sub_system power unit interposed between one or more power_consuming loads and the power distribution center. Optionally, a plurality of such sub_system power units can be connected to one power distribution center.

The power distribution center includes a current monitoring arrangement that is able to detect current variations having a current variation magnitude greater than a first detection threshold and to release a fault signal or fault message if a current variation with a magnitude above the first detection threshold is detected. The sub_system power unit has a monitored load connected thereto, whereby the monitored load may include one or more individual power_consuming devices or components such as one or more individual lightbulbs or LEDs. The sub_system power unit further includes a fault detection arrangement that monitors the monitored load, and especially for example, monitors the current being drawn by the monitored load.

The fault detection arrangement is able to detect a variation of the drawn current deviating from the nominal current of the monitored load by an amount greater than a second detection threshold, which is lower than the first detection threshold of the current monitoring arrangement of the power distribution center. Particularly, the second detection threshold of the fault detection arrangement of the sub_system power unit is low enough so as to be able to detect a failure or fault of even a single power_consuming component, such as a single lightbulb or LED, connected to the sub_system power unit.

The sub_system power unit further includes a power unit switch interposed between the monitored load and the connection to the power distribution center. The sub_system power unit may optionally additionally include a signaling shunt resistor and a signaling switch connected in series with one another between a reference potential and the connection to the power distribution center. In other words, the signaling switch and the signaling shunt resistor are arranged in parallel with the power unit switch and the monitored load between the power distribution center and the reference potential such as ground. If the fault detection arrangement of the sub_system power unit detects a fault or failure in the monitored load, e.g. the failure of a single LED, then the sub_system power unit will control the power unit switch and/or the signaling switch so as to modulate the current being drawn by the sub_system power unit from the power distribution center, in such a way that the current monitoring arrangement of the power distribution center will detect the resulting current variation and thus release a fault message or signal.

The above objects have further been achieved according to the invention in a method of detecting faults in an aircraft electrical power system, for example including a power bus, a power distribution center, and one or more sub_system power units respectively serving a monitored power_consuming load, as described above. In the inventive method, a fault in the monitored load causing a current variation above the second detection threshold of the sub_system power unit is detected in the fault detection arrangement of the sub_system power unit. If the resulting current variation arising due to this fault is also above the first detection threshold of the current monitoring arrangement of the power distribution center, then the current monitoring arrangement of the power distribution center will directly detect, recognize and signal the fault.

However, if the current variation arising due to the fault is below the first detection threshold of the current monitoring arrangement of the power distribution center, then the sub_system power unit takes special steps to signal the fault to the power distribution center, as follows.

For example, if the total load, i.e. the total normal current draw connected to the subsystem power unit, is above the first detection threshold of the power distribution center, but the individual fault causes a current variation below the first detection threshold of the power distribution center, then the sub_system power unit may signal the fault in the following manner. Upon starting-up or actuating the power distribution center, the sub_system power unit will not immediately close the power unit switch to power the connected monitored load, but instead will keep the power unit switch open during a certain time delay, and will then close the power unit switch after the time delay in order to thereby supply current to the remaining functional components of the overall monitored load (e.g. the remaining functional LEDs of an LED group including several LEDs connected in parallel). The current monitoring arrangement of the power distribution center detects this time delay between switching-on the power distribution center and the time at which the sub_system power unit draws its operating current. Based on this time delay or time lag, the power distribution center recognizes a fault and correspondingly releases a fault signal or message. In this regard, different time delays can be associated with respective different sub_system power units, so that the power distribution center can detect not only the existence of a fault, but also identify the particular sub_system power unit that has signaled the existence of the fault. As a further alternative, a succession of current pulses can be generated rather than merely a time delay of a single start-up rising current flank.

Alternatively, if the entire monitored load connected to the sub_system power unit draws a normal operating current below the first detection threshold of the power distribution center, then the power distribution center will not be able to detect whether or not the sub_system power unit (i.e. its connected monitored load) is drawing current, either with or without a time delay. Thus, in such a case, in order to signal the detected fault in the monitored load, the sub_system power unit will close the signaling switch in a modulated manner, in order to draw current through the signaling shunt resistor, to generate a corresponding modulated current signal on the power conductor connected between the power distribution center and the sub_system power unit. The signaling shunt resistor is sized appropriately so that the current drawn through it has a magnitude greater than the first detection threshold of the current monitoring arrangement of the power distribution center.

In this case also, the modulation may again simply involve a time delay between the switching_on of power through the power distribution center and the closing of the signaling switch. Alternatively, the modulation may involve a repetitive on_off switching of the signaling switch in order to generate a series of current pulses and gaps in the current being drawn. The timing, sequence and pattern of these current pulses is detected by the current monitoring arrangement of the power distribution center, and is recognized as indicating a particular type of fault and/or a particular source of the fault, e.g. identifying the particular monitored load that includes the faulty individual component. The power distribution center then releases a corresponding fault message or signal.

Thus, according to the invention, generally the existence of a fault causing a current variation below the first detection threshold of the power distribution center but at or above the second detection threshold of the sub-system power unit is signaled to the power distribution center by the affected sub_system power unit by modulating the total current consumption or total current drawn by this sub_system power unit in such a manner that can be detected by the power distribution center. This is preferably achieved by artificially varying the total current drawn by the sub_system power unit, for example by delaying the switch-on of the operating current, or by drawing a modulated shunt current through a signaling shunt resistor and a signaling switch.

Further preferably, the current modulation of the total drawn current is carried out in such a manner so that it can be reliably detected and recognized by the power distribution center, even despite the existence of high frequency interference causing high frequency variations in the onboard power grid or system. Particularly, the artificially generated current fluctuation forming the current modulation shall unambiguously identify the existence of the fault, the type or nature of the fault, and the sub_system that is affected by the fault, in such a manner so that these identifying informations can be detected and signaled or indicated by the power distribution center.

Another feature of the invention is that small current variations in the current being drawn by the monitored load connected to a sub_system power unit are monitored with a relatively high sensitivity, i.e. a relatively low detection threshold. Then, a detected fault in the monitored load is, in effect, amplified to an unambiguously detectable and recognizable current variation value that can be detected and identified by the current monitoring arrangement of the power distribution center, which responsively thereto releases a fault signal or message compatible with the rest of the electrical and monitoring system of the aircraft.

Another preferred feature of the invention is that the fault signals represented in the modulation of the total current being drawn by a sub_system power unit are encoded in such a manner through suitable modulation, so that the type or nature of the fault, and the identity of the affected monitored load and/or sub_system power unit can be unambiguously recognized by the power distribution center. Furthermore, the encoding of the modulated current signal is such so that any typically arising power bus fluctuations or variations (e.g. due to various types of interference and/or due to the normal switching on and off of various connected power_consuming devices) do not cause erroneous or invalid fault indications. In other words, the fault signal provided through the modulated current being drawn by the affected sub_system power unit shall have such a modulation pattern or encoding that is unambiguously distinguishable and recognizable as a fault signal rather than a normally occurring or spurious power fluctuation.

It is a significant advantage of the invention, that a fault of a power_consuming component or load that has a very low power consumption can still be reliably indicated and detected, without requiring additional signal lines or the like between the monitored load and the power distribution center. The only connection between the power distribution center and the sub_system power unit is the existing power connection through a power conductor line or power bus. Since even a partial fault of a monitored load, or the failure of an individual power_consuming component such as an individual lightbulb or LED, can have significant operational effects, it is of great value to be able to detect and identify such partial faults and individual failures. A further advantage of the invention is that no specialized interface hardware is required, so that the inventive components and method can be incorporated into previously existing systems without difficulty.

### BRIEF DESCRIPTION OF THE DRAWINGS

In order that the invention may be clearly understood, it will now be described in connection with an example embodiment thereof, with reference to the accompanying drawings, wherein:
- Fig. 1: is a schematic block circuit diagram of an electrical power system in an aircraft according to the invention, including a monitored load connected via a sub_system power unit and a power distribution center to a main power bus;
- Fig. 2A: is a schematic time diagram indicating the start_up switching_on of the power distribution center;
- Fig. 2B: is a schematic time diagram showing the current drawn by a sub_system power unit in normal non_fault operation, in which the sub_system power unit switches on immediately following the switching_on of the power distribution center;
- Fig. 2C: is a schematic time diagram showing the current being drawn by the sub_system power unit in the event of a detected fault in the connected monitored load, whereby the sub_system power unit switches on the current after a time delay following the switching_on of the power distribution center; and
- Fig. 2D: is a schematic time diagram representing the artificial current modulation of the current drawn by the sub_system power unit as a signal identifying the existence, nature and source of a fault to the power distribution center.

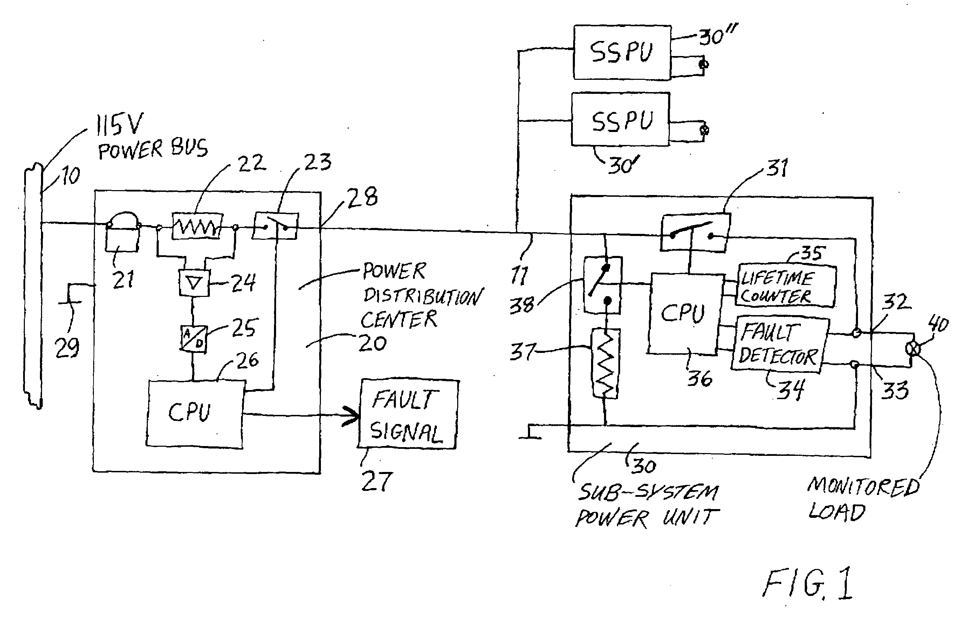

As schematically illustrated in Fig. 1, an electrical power system in an aircraft according to the invention includes a main electrical power bus 10, a power distribution center 20 connected to the power bus 10, and one or more sub_system power units 30, 30' and 30" connected via a sub_system power conductor or bus 11 to the power distribution center 20. A monitored electrical load 40 is connected to the power terminals 32 and 33 of the sub_system power unit 30 so as to be powered thereby.

The monitored load 40 includes one or more individual power_consuming components or devices, such as an individual lightbulb or a group of lightbulbs connected in series or parallel. The term "lightbulb" includes any electrically powered light source, such as an incandescent lightbulb, a fluorescent lightbulb, a light emitting diode (LED), a xenon flash tube, a high intensity discharge (HID) light source, or the like. The monitored load 40 may further include additional consumable parts, such as a load capacitor associated with a xenon flash tube, a heater coil, or the like.

The power distribution center 20 distributes electrical power from the power bus 10 to the one or more sub_system power units 30, 30' and 30" through the one or more power conductors or buses 11. The electrical power supplied through this system is, for example, 115 V power typically available from the power bus of an aircraft. For distributing, controlling and monitoring the supplied power, the power distribution center 20 includes several internal components. First, on the power input side connected to the power bus 10, the power distribution center includes a fuse or circuit breaker 21, e.g. a 3 amp circuit breaker in this example. Connected in series with the circuit breaker 21, the power distribution center 20 further includes a current measuring resistor 22 and a power distribution center switch 23. A voltage sensor 24 (e.g. embodied in a voltage amplifier) senses the voltage across the current measuring resistor 22 so as to correspondingly measure the current being supplied through the resistor 22 and the switch 23. The output of the voltage sensor 24 is converted from an analog signal to a digital signal in an analog_to_digital converter 25, and the resulting digital signal is provided to a computer processor (CPU) 26.

This CPU 26 controls the power distribution center switch 23, i.e. closes or opens the switch 23 to either supply or not supply electrical power through the distribution conductor(s) or bus(es) 11 to the sub_system power units 30, 30' and 30". The CPU 26 also monitors the current flowing through the power distribution center 20, i.e. through the current measuring resistor 22, to detect fault situations, e.g. by comparing the measured current level to internally stored thresholds, current variation patterns, stored nominal current values, or the like. If the CPU 26 detects and recognizes an improper current situation, characterized by a current variation having a magnitude greater than a minimum detectable first detection threshold, the CPU 26 releases a fault message or signal 27.

The first detection threshold is, however, greater than the normal current level drawn by an individual power_consuming component or element (e.g. a single LED lightbulb) of the monitored load 40. On the other hand, the normal operating current drawn by the total of the one or more sub_system power units 30, 30' and 30" is (in this example) above the first detection threshold. Thus, the current monitoring arrangement made up of the current measuring resistor 22, the voltage sensor 24, the A-to-D converter 25 and the CPU 26 of the power distribution center 20, is able (in this example) to detect a complete failure of the one or more sub_system power units 30, 30' and 30" connected to the power distribution center 20, but is not able to detect the failure of a single power_consuming element such as a single LED, of the monitored load 40.

The sub_system power unit 30 includes a power unit switch 31 between the sub_system power conductor or bus 11 and the power output terminal 32 connected to the monitored load 40. The second power terminal 33 is connected to a reference potential such as ground. Thus, when the power unit switch 31 is closed, power flows from the power distribution center (assuming the switch 23 is closed) via the sub_system power unit 30 through the monitored load 40 and then to ground forming the return side of the power system.

The sub_system power unit 30 further includes a fault detection arrangement comprising a fault detector 34 and a CPU 36. The fault detector 34 monitors the operation of the monitored load 40 to detect any malfunction, fault or failure thereof (generally called a fault herein). For example, the fault detector 34 may be a current monitor including a current measuring resistor, a voltage sensor, and an A_to_D converter similar to the arrangement in the power distribution center 20. This fault detector 34 has a second detection threshold that is substantially lower than the first detection threshold in the power distribution center 20. Particularly, the second detection threshold of the fault detector 34 is low enough to detect the failure of a single power_consuming element, such as a single LED, of the monitored load 40.

For example, the monitored load 40 may include plural LEDs connected in parallel, so that when one LED fails, the remaining LEDs remain functional, but the total current flowing through the monitored load 40 is reduced due to the failure of one of the LEDs. The fault detector 34 detects this small change in the current drawn by the monitored load 40, while this small change is below the first detection threshold of the power distribution center 20, so that this fault cannot be directly detected by the power distribution center 20. The types of faults that can be detected by the fault detector 34 of the sub_system power unit 30 include, for example, a bulb that has failed or "blown out", a total or partial short circuit or open circuit in the monitored load 40, a total or partial short circuit or open circuit within the sub_system power unit 30, and others. If, on the other hand, the change in the current due to the fault in the monitored load 40 (e.g. due to the failure of all of the power_consuming elements of the monitored load 40, or the failure of a large single monitored load 40) causes a current variation having a magnitude above the first detection threshold of the power distribution center 20, then the current monitoring arrangement of the power distribution center 20 can directly detect the existence of a fault, and correspondingly will release the fault signal 27.

In the event the fault detected in the monitored load 40 by the fault detector 34 is of the type that is not detectable by the power distribution center 20 (i.e. due to low current influence of the fault), the sub_system power unit 30 will artificially generate a current signal that is detectable by the power distribution center 20. Particularly, this is achieved by modulating the current drawn by the sub_system power unit 30 with a modulation magnitude greater than the first detection threshold of the power distribution center 20, so that this modulated current consumption of the sub_system power unit 30 is recognized as a fault by the power distribution center 20. This can be achieved by various different current modulation processes, two examples of which will be described below.
A first example of the current modulation pertains especially when the total load, i.e. the total normal current drawn by the monitored load 40 connected to the sub_system power unit 30, is greater than or equal to the first detection threshold of the current monitoring arrangement of the power distribution center 20. In other words, the power distribution center 20 is able to detect the difference between the sub_system power unit 30 drawing no current and the sub_system power unit 30 drawing its total normal operating current. In this case, the sub_system power unit 30 can use the monitored load 40 and the power unit switch 31 to carry out the current modulation. Upon start_up of the power distribution center 20, i.e. by closing the power distribution center switch 23, the CPU 36 of the sub_system power unit 30 detects the availability of power (e.g. sensing the voltage between the conductor 11 and ground) and immediately checks the monitored load 40 for a fault via the fault detector 34. Alternatively or additionally, the CPU 36 has stored a fault detection that arose in a previous operating cycle.

If a fault is presently detected or has been detected in the previous operating cycle, the CPU 36 opens the power unit switch 31 and keeps it open for a certain time delay, so that the monitored load 40 does not yet draw its normal operating current. After the elapse of the time delay, the CPU 36 closes the power unit switch 31 so that the operating current is then drawn by the monitored load 40 (whereby this operating current is slightly reduced due to the failure of one of the LEDs, for example).

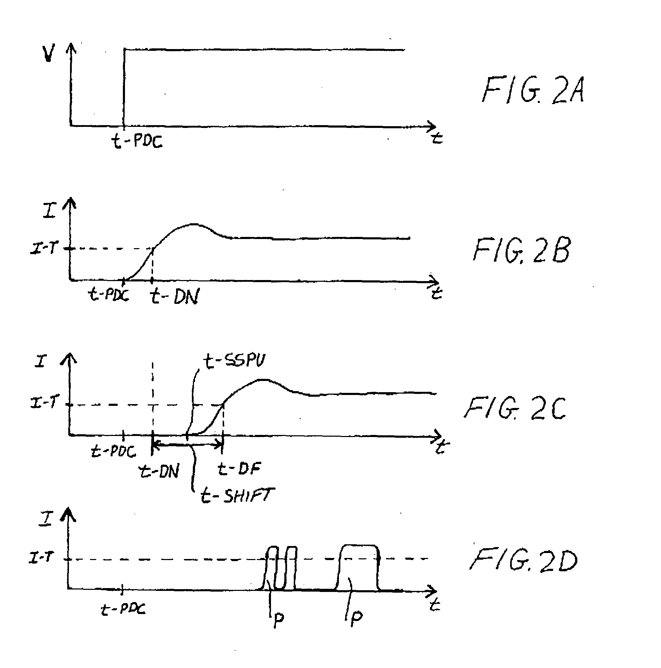

The above mentioned time delay before switching on the power unit switch 31 to provide the operating current to the monitored load 40 can be seen schematically in Figs. 2A, 2B and 2C. Fig. 2A represents the switching_on of the power distribution center 20 by closing the switch 23, so that the operating voltage is available as of the time t_PDC. Then, in normal operation without any fault as shown in Fig. 2B, the sub_system power unit 30 switches on the power unit switch 31 essentially immediately, whereupon the current drawn by the monitored load 40 rises and then settles to its normal operating level with its normal start_up transient behavior. At a certain expected time t_DN, the current being drawn by the sub_system power unit 30 reaches the first detection threshold I_T of the power distribution center 20, so that the power distribution center 20 recognizes the normal operation of the sub_system power unit 30.

On the other hand, if an internal fault was detected in the sub_system power unit 30 by the fault detector 34 and CPU 36, the switching_on of the power unit switch 31 is delayed until time t_SSPU, as shown in Fig. 2C. Thereafter the current being drawn through the monitored load 40 rises and settles to its operating level, whereby the current reaches and exceeds the first detection threshold I_T at a time t_DF. The power distribution center 20 detects and recognizes the time delay or time shift t_SHIFT between the expected time t_DN and the actual occurring time t_DF at which the drawn power reaches and exceeds the first detection threshold I_T. Upon recognizing this time delay or time shift t_SHIFT, the power distribution center 20, or particularly the CPU 26 thereof, recognizes that a fault has been detected in the sub_system power unit 30 and responsively thereto releases the fault signal 27.

In this regard, the length of the time delay or time shift t_SHIFT can be uniquely associated with the particular sub_system power unit 30, so that the power distribution center 20 can recognize which one of the sub_system power units 30, 30' or 30" has indicated the fault. The fault signal 27 correspondingly identifies the sub_system power unit indicating the fault.

A second example of the current modulation for signaling a fault can be used in the above mentioned case when the total current drawn by the monitored load 40 is at or above the first detection threshold of the power distribution center 20, but especially also pertains when the total current being drawn by the monitored load 40 is below the first detection threshold of the power distribution center 20. In such a case, the sub_system power unit 30 cannot simply use the monitored load 40 and the power unit switch 31 for achieving the signaling modulation of the drawn current. Instead, the CPU 36 actuates a signaling switch 38 to draw a shunt current through a signaling shunt resistor 37 from the power conductor 11 to ground. The resistance value of the signaling shunt resistor 37 is selected to ensure that the shunt current being drawn therethrough has a large enough magnitude to be detected by the current monitoring arrangement of the power distribution center 20.

The signaling shunt branch formed by the shunt resistor 37 and the signaling switch 38 can be operated by the CPU 36 completely independently of the power unit switch 31 that supplies power to the monitored load 40. Thus, the current modulation signaling achieved via the signaling switch 38 can be achieved at any time during the operation of the system, i.e. not only immediately following the start_up of the power distribution center 20.

By correspondingly cycling or opening and closing the signaling switch 38, this generates a corresponding modulated pattern of current pulses P being drawn through the signaling switch 38 and shunt resistor 37, with a current magnitude greater than the first detection threshold I_T of the power distribution center 20, as represented schematically in Fig. 2D. The CPU 26 of the power distribution center 20 thus recognizes that a fault has been detected in the sub_system power unit 30 and is being signaled to the power distribution center 20. Accordingly, the CPU 26 releases the fault signal 27. The specific modulation pattern of the current pulses P generated by the pulsed actuation of the signaling switch 38 provides a recognizable signal pattern to the CPU 26. Correspondingly, through comparison with stored information, the CPU 26 can identify the type or nature of the fault (e.g. blown lightbulb) as well as the source or location of the fault (e.g. originating in sub_system power unit 30), and provide corresponding indications in the fault signal 27.

As shown in Fig. 1, the sub_system power unit 30 additionally may include a lifetime counter 35 that is manually resettable each time consumable parts of the monitored load 40 (e.g. lightbulbs, capacitors or the like) are replaced. The lifetime counter 35 counts the actual operating life of the consumable parts of the monitor load 40. Once the actual operating life reaches the stored nominal operating life value, i.e. the operating life has expired, then the lifetime counter 35 provides a signal to the CPU 36, which provides a corresponding signal via the current modulation achieved with the signaling switch 38 and/or the power unit switch 31 as described above. Accordingly, upon receiving such a signal, the power distribution center 20 will release the fault signal 27 including an indication that the operating life of consumable parts of the monitored load 40 of the sub_system power unit 30 has expired.

The fault signal 27 provided by the power distribution center 20 thus provides detailed information for the maintenance or servicing of the electrical system, and especially regarding the replacement or repair of components of the monitored load 40, such as lightbulbs, capacitors, and the like, or even regarding the inspection or testing of components within the sub_system power unit itself. The maintenance indications may thus include instructions such as "replace bulb (identifier number)", "replace capacitor (identifier number)", "check bulb (identifier number)", "check power unit (identifier number)", "bulb (identifier number) life expired", etc.

In general, the inventive system and method use the power conductor or bus 11 between the power distribution center 20 and the sub_system power unit 30 also as a signal line for conveying a fault signal from the sub_system power unit 30 back to the power distribution center 20. This signal particularly is a modulated current signal with a current modulation magnitude greater than the minimum detection threshold of the power distribution center 20, so that the current modulation can be detected and also recognized as a fault signal conveying particular fault information. To achieve this, the current drawn by the sub_system power unit is artificially modulated as needed.

The remaining operational components or elements of the monitored load 40 can remain in substantially normal operation, e.g. the modulation does not need to noticeably affect the operation of the lightbulbs or the like making up the monitored load 40. Only when the time delay of switching on the power unit switch 31 is used to achieve the current modulation, will there be a slight delay in the initial switching_on of the functional components of the monitored load 40, but such a delay will not be noticeable or unacceptable in the operation of the monitored load. The current modulation signaling achieved with the signaling switch 38 does not influence the operation of the monitored load 40 at all.

The modulated current signal, in each case, can be superimposed on the current drawn by any one or more of the sub_system power units.

Although the invention has been described with reference to specific example embodiments, it will be appreciated that it is intended to cover all modifications and equivalents within the scope of the appended claims. It should also be understood that the present disclosure includes all possible combinations of any individual features recited in any of the appended claims.

## Claims

1. In an aircraft having an electrical power system including an electrical power bus, a power distribution center connected to said power bus, and a power_consuming load connected selectively via said power distribution center to said power bus,
said power distribution center includes a current monitoring arrangement that is able to detect a current variation having a current magnitude equal to or greater than a first detection threshold, in a current supplied through said power distribution center from said power bus;
said electrical power system further comprises a sub_system power unit that is interposed and connected between said power distribution center and said power_consuming load, which is a monitored load connected to said sub_system power unit;
said sub_system power unit includes a fault detection arrangement that is able to detect a current variation having a current magnitude equal to or greater than a second detection threshold, in a current supplied through said sub-system power unit to said monitored load, wherein said second detection threshold is lower than said first detection threshold; and
said sub_system power unit further includes a switching device that is interposed in a current path between said power distribution center and a reference potential, and a computer controller that is connected to said switching device and to said fault detection arrangement and that is adapted to control said switching device to modulate a modulated signaling current drawn through said current path in response to and dependent on said fault detection arrangement detecting said current variation having said current magnitude equal to or greater than said second detection threshold.

2. Aircraft with an the electrical power system according to claim 1, wherein said sub_system power unit is configured and adapted so that said modulated signaling current has a current magnitude equal to or greater than said first detection threshold.

3. Aircraft with an the electrical power system according to claim 2, wherein said switching device is a power unit switch interposed between said power distribution center and said monitored load, and said current path extends through said power unit switch and said monitored load to said reference potential.

4. Aircraft with an the electrical power system according to claim 2, wherein said switching device is a signaling switch, said sub_system power unit further includes a signaling shunt resistor connected in series with said signaling switch in said current path between said power distribution center and said reference potential.

5. Aircraft with an the electrical power system according to claim 1, wherein said monitored load includes only a single power_consuming component that draws a nominal operating current with a current magnitude below said first detection threshold and above said second detection threshold.

6. Aircraft with an the electrical power system according to claim 1, wherein said monitored load includes a plurality of power_consuming components that each individually draw a nominal operating current with a current magnitude below said first detection threshold and above said second detection threshold, and that are connected parallel to each other so that said plurality of power_consuming components together draw a total nominal operating current with a total current magnitude above said first detection threshold.

7. Aircraft with an the electrical power system according to claim 1, wherein said monitored load includes a consumable part, and said sub-system power unit further comprises a resettable lifetime counter adapted to count an operating lifetime of said consumable part.

8. Aircraft with an the electrical power system according to claim 1, wherein said fault detection arrangement is adapted to monitor said current supplied through said sub_system power unit to said monitored load relative to a nominal current value that is nominally assigned to said monitored load.

9. Aircraft with an the electrical power system according to claim 1, wherein said electrical power system includes a power conductor that connects said sub_system power unit to said power distribution center and that carries all of said current including said modulated signaling current, and wherein there is no other signal_carrying connection between said sub_system power unit and said power distribution center.

10. An electrical power system for an aircraft comprising:
an electrical power bus;
a power distribution center that is connected to said power bus and that includes first means for detecting a current variation having a current magnitude equal to or greater than a first detection threshold in a current supplied through said power distribution center from said power bus;
a monitored power_consuming load; and
a sub_system power unit that is interposed and connected between said power distribution center and said monitored power_consuming load, and that includes second means for detecting a current variation having a current magnitude equal to or greater than a second detection threshold in a current supplied through said sub_system power unit to said monitored power_consuming load wherein said second detection threshold is lower than said first detection threshold, and that includes means for drawing a modulated signaling current having a current magnitude greater than said first detection threshold from said power distribution center responsive to and dependent on said second means detecting said current variation in said current supplied to said monitored power_consuming load having said current magnitude equal to or greater than said second detection threshold.

11. A method of detecting a fault in an electrical power system in an aircraft, wherein said electrical power system includes a power bus, a power distribution center connected to said power bus, at least one sub_system power unit connected to said power distribution center, and a monitored power_consuming load connected to said sub_system power unit and via said sub_system power unit and said power distribution center to said power bus, and wherein said method comprises the steps:
a) in said sub_system power unit, detecting a fault of said monitored power_consuming load;
b) in said sub_system power unit, modulating a current drawn by said sub-system power unit from said power distribution center to produce a modulated current signal responsive to and dependent on said detecting of said fault;
c) in said power distribution center, detecting said modulated current signal; and
d) in response to and dependent on said detecting of said modulated current signal, recognizing in said power distribution center that said fault has been detected.

12. The method according to claim 11, wherein high frequency interference exists in said electrical power system, and wherein said modulating in said step b) to produce said modulated current signal is carried out so that said steps c) and d) can be carried out unambiguously and uninfluenced by said high frequency interference.

13. The method according to claim 11, wherein spurious current fluctuations exist in said electrical power system, and wherein said modulating in said step b) to produce said modulated current signal is carried out so that said steps c) and d) can be carried out unambiguously and uninfluenced by said spurious current fluctuations.

14. The method according to claim 11, wherein said modulating in said step b) is carried out to produce said modulated current signal with an unambiguous signal encoding, and wherein said detecting and said recognizing in said steps c) and d) comprise detecting and recognizing said unambiguous signal encoding of said modulated current signal.

15. The method according to claim 14, wherein said signal encoding unambiguously identifies an existence of said fault, and said step d) further comprises releasing a fault signal that indicates said existence of said fault.

16. The method according to claim 14, wherein said signal encoding unambiguously identifies a type of said fault, and said step d) further comprises releasing a fault signal that indicates said type of said fault.

17. The method according to claim 14, wherein said signal encoding unambiguously identifies a source and/or a location of said fault, and said step d) further comprises releasing a fault signal that indicates said source and/or said location of said fault.

18. The method according to claim 11, wherein said modulating in said step b) comprises delaying, by a time delay, a beginning of said current drawn by said sub_system power unit after switching_on a supply of current through said power distribution center, and wherein said detecting and said recognizing in said steps c) and d) comprise detecting and recognizing said time delay.

19. The method according to claim 18, wherein said fault is a partial fault of said monitored power_consuming load so that current can still flow through said monitored power_consuming load, and said current drawn and modulated by said sub_system power unit to produce said modulated current signal flows through said monitored power_consuming load.

20. The method according to claim 11, wherein said modulating in said step b) comprises modulating said current drawn by said sub_system power unit to produce a sequence of current pulses and gaps in said current drawn by said sub_system power unit so as to form said modulated current signal comprising said current pulses and gaps.

21. The method according to claim 20, wherein said current drawn by said sub_system power unit flows through a shunt signaling current path parallel to an operating current path including said monitored power_consuming load.

22. The method according to claim 11, wherein said modulating in said step b) comprises amplifying a current variation magnitude of said fault detected in said step a) to a higher variation current magnitude in said modulated current signal that can be detected in said power distribution center in said step c).

23. The method according to claim 11, wherein said fault comprises a fault current variation magnitude, which must be equal to or greater than a sub_system detection threshold to be detected in said step a), wherein said modulated current signal has a modulated signal current variation magnitude, which must be equal to or greater than a power distribution center detection threshold to be detected in said step c), and wherein said sub-system detection threshold is lower than said power distribution center detection threshold.

24. The method according to claim 23, wherein said fault current variation magnitude is below said power distribution center detection threshold.

25. The method according to claim 11, wherein said detecting of said fault in said step a) comprises measuring an actual current magnitude of a current flowing through said monitored power_consuming load and comparing said actual current magnitude to a stored nominal current magnitude.

26. The method according to claim 11, wherein said step a) further comprises counting a duration of an actual operating lifetime of said monitored power_consuming load, and said detecting of said fault comprises recognizing that said actual operating lifetime has reached or exceeded a stored nominal operating lifetime.
